# EUROPEAN PATENT APPLICATION

(11) **EP 4 793 608 A1**
(43) Date of publication of application: **19.08.2026**
(21) Application number: 24877343.4
(22) Date of filing: 07.06.2024
(51) Int. Cl.: G01K 11/32, G01Q 60/18

(54) **TEMPERATURE DISTRIBUTION MEASUREMENT DEVICE USING OPTICAL PROBE**

(30) Priority: 11.10.2023 KR 20230135212; 21.11.2023 KR 20230162366
(71) Applicant: Korea Basic Science Institute, Daejeon 34133 (KR)
(72) Inventor: HAN, Il Kyu, Daejeon 34121 (KR); CHANG, Ki Soo, Daejeon 34069 (KR); KIM, Dong Uk, Daejeon 34140 (KR); JEONG, Chan Bae, Sejong 30141 (KR); KIM, Dong Mok, Dalseong-gun Daegu 42909 (KR); JEONG, Mun Goung, Daejeon 34938 (KR)
(74) Representative: Lindner Blaumeier Patent- und Rechtsanwälte
(86) International application number: PCT/KR2024/007786
(87) International publication number: WO 2025/079803

(57) **Abstract**

A temperature distribution measurement device according to an embodiment may include: a sample holder on which a sample is placed; a light source unit for outputting an optical signal; an optical probe for emitting the optical signal to the sample in a state of being spaced apart from the sample and collecting an optical signal reflected from the sample; a detector for detecting the collected optical signal; a processing unit for receiving the optical signal detected by the detector in the form of a current signal, calculating a reflectance change amount of the sample on the basis of the received current signal, and calculating a temperature change value of a first point of the sample through the calculated reflectance change amount; and an observation unit capable of observing the positions of the sample and the optical probe.

## Description

### TECHNICAL FIELD

The present disclosure relates to a temperature distribution measurement device using an optical probe.

### BACKGROUND ART

With the advancement of semiconductor manufacturing process technology, significant localized heat generation may occur in a microscopic region of a device as an electronic or electrical device is miniaturized and highly integrated to achieve low power consumption and high performance. Heat generated in the electronic or electrical device may deteriorate power efficiency of the device, and specifically, localized heat generation may cause device failure leading to a shortened lifespan and reduced reliability. Accordingly, there is an increasing demand for high spatial resolution temperature distribution measurement technology to accurately locate a heat generation position in a microscopic region.

The temperature distribution measurement device may be a device for measuring and analyzing a temperature change in a specific system. The temperature distribution measurement device may monitor a temperature change in real time and collect and analyze data.

In the case of an infrared camera used as the temperature distribution measurement device, a temperature distribution of a sample may be relatively simply measured using infrared (3 to 5 µm) radiation. However, the infrared camera may have a spatial resolution of about 3 µm due to the diffraction limit.

A thermoreflectance microscope used as the temperature distribution measurement device may be a device for measuring a change in reflectance using the characteristic that the reflection of a material varies depending on the temperature and obtaining a heat distribution of the sample therefrom. Since the thermoreflectance microscope uses light in a visible light region (400 to 700 nm) having a shorter wavelength than infrared light, the thermoreflectance microscope may have high spatial resolution that meets the need for a microscopic region temperature distribution measurement device but may also have maximum spatial resolution of about 300 nm due to the diffraction limit. Meanwhile, in the thermoreflectance microscope, the spatial resolution thereof varies depending on the wavelength of light used for measurement while a degree (a thermoreflectance coefficient) to which the reflectance of a material changes depending on the temperature is also related to the measurement wavelength, and thus, the spatial resolution may be limited according to the material characteristics of a measurement target.

Meanwhile, a scanning near-field optical microscopy (SNOM) using near-field may be provided as a technology for overcoming the diffraction limit of the optical microscope and obtaining higher spatial resolution. The SNOM may collect and image an optical signal via a small hole in a micro-optical probe positioned at a near-field distance without contacting a measurement target. Since the spatial resolution of the SNOM is determined based on the diameter of the hole of the optical probe regardless of the measurement wavelength, the SNOM may have high spatial resolution less than or equal to 300 nm.

### DISCLOSURE OF THE INVENTION

### TECHNICAL SOLUTIONS

A temperature distribution measurement device according to an embodiment includes a sample holder on which a sample is placed, a light source unit configured to output an optical signal, an optical probe configured to irradiate the optical signal to the sample while being spaced apart from the sample and collect an optical signal reflected from the sample, a detector configured to detect the collected optical signal, a processing unit configured to receive the optical signal detected by the detector in a form of a current signal, calculate an amount of reflectance change of the sample based on the received current signal, and calculate a temperature change value at a first point of the sample using the calculated amount of reflectance change, and an observation unit configured to observe a position of the sample and a position of the optical probe.

In an embodiment, the temperature distribution measurement device further includes an oscillator attached to the optical probe, and a distance controller configured to measure an amplitude and frequency of the oscillator and control the optical probe to maintain a distance between the optical probe and the sample to be constant based on the measured amplitude and the measured frequency of the oscillator.

In an embodiment, the amplitude and the frequency of the oscillator change as the distance between the optical probe and the sample changes.

In an embodiment, the processing unit is further configured to calculate temperature conversion values at other points of the sample and obtain a temperature change distribution image of the sample by matching each of the calculated temperature conversion values to each pixel.

In an embodiment, the sample includes a first area, and a second area having a height that is different from a height of the first area.

In an embodiment, the optical probe is further configured to irradiate an optical signal along a boundary between the first area and the second area.

In an embodiment, the observation unit is movable in a first direction that is a height direction of the sample holder.

In an embodiment, the temperature distribution measurement device further includes a probe holder configured to support the optical probe, wherein the probe holder is movable in a second direction intersecting with the first direction.

### BRIEF DESCRIPTION OF DRAWINGS

FIG. 1 is a diagram schematically illustrating a temperature distribution measurement device using an optical probe according to an embodiment.
FIG. 2 is a partial enlarged view of an end portion of an optical probe according to an embodiment.
FIG. 3 is a diagram schematically illustrating a fast Fourier transform (FFT) process of a processing unit according to an embodiment.
FIGS. 4A and 4B are diagrams illustrating a temperature change distribution image according to an embodiment.
FIG. 5 is a graph showing a force with respect to a distance between a surface of a sample and an optical probe according to an embodiment.
FIG. 6 is a plan view of a scanning direction of a sample according to an embodiment.
FIG. 7 is a diagram illustrating a processing unit of a temperature distribution measurement device according to an embodiment.

### BEST MODE FOR CARRYING OUT THE INVENTION

The following structural or functional descriptions of embodiments described herein are merely intended for the purpose of describing the embodiments described herein and may be implemented in various forms. Accordingly, the embodiments are not to be construed as limited to the disclosure and should be understood to include all changes, equivalents, or replacements within the idea and the technical scope of the disclosure.

Terms, such as "first", "second", and the like may be used herein to describe components. Each of these terminologies is not used to define an essence, order or sequence of a corresponding component but used merely to distinguish the corresponding component from other component(s). For example, a first component may be referred to as a second component, and similarly, the second component may also be referred to as the first component.

It should be noted that if one component is described as being "connected", "coupled", or "joined" to another component, a third component may be "connected", "coupled", and "joined" between the first and second components, although the first component may be directly connected, coupled, or joined to the second component.

As used herein, the singular forms "a," "an," and "the" are intended to include the plural forms as well, unless the context clearly indicates otherwise. It will be understood that the terms "comprises/comprising" and/or "includes/including" when used herein, specify the presence of stated features, integers, steps, operations, elements, components, or groups thereof, but do not preclude the presence or addition of one or more other features, integers, steps, operations, elements, components, or groups thereof.

The same name may be used to describe an element included in the embodiments described above and an element having a common function. Unless disclosed to the contrary, the description of any one embodiment may be applied to other embodiments, and the specific description of the repeated configuration will be omitted.

Unless otherwise defined, all terms, including technical and scientific terms, used herein have the same meaning as commonly understood by one of ordinary skill in the art to which this disclosure pertains. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

Hereinafter, embodiments are described in detail with reference to the accompanying drawings. When describing the embodiments with reference to the accompanying drawings, like reference numerals refer to like elements and a repeated description related thereto is omitted.

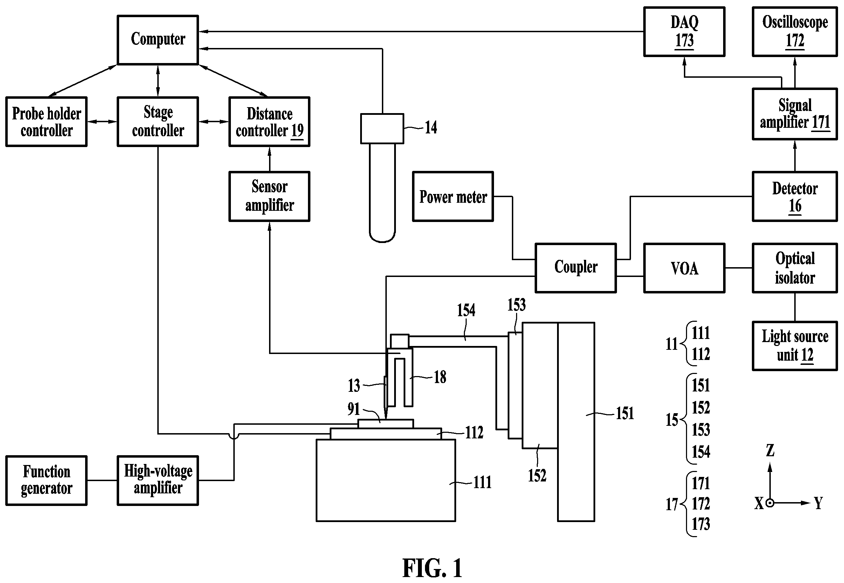

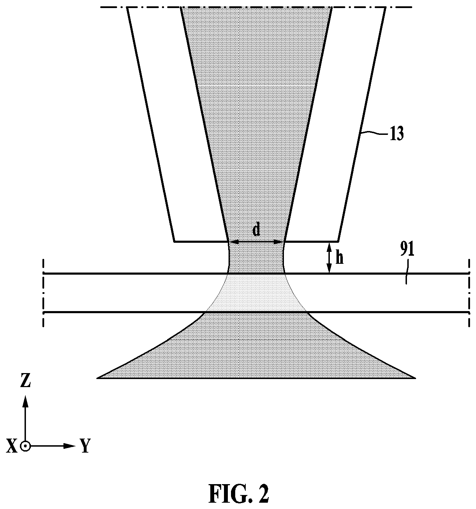

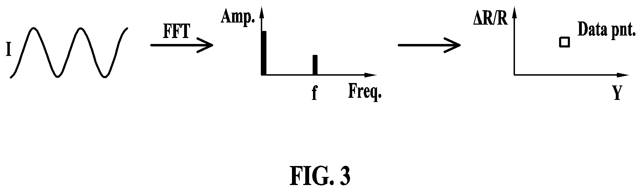

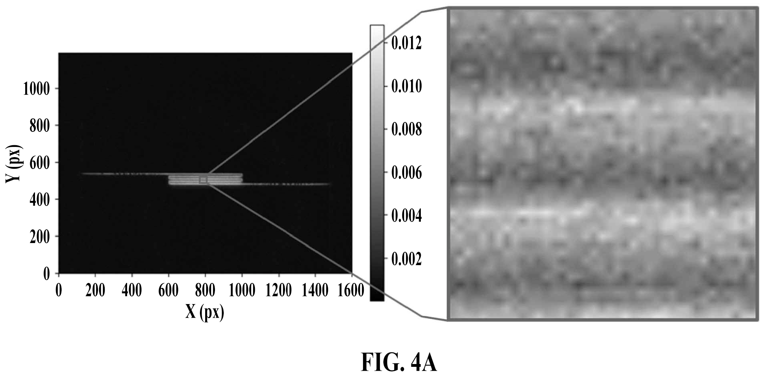

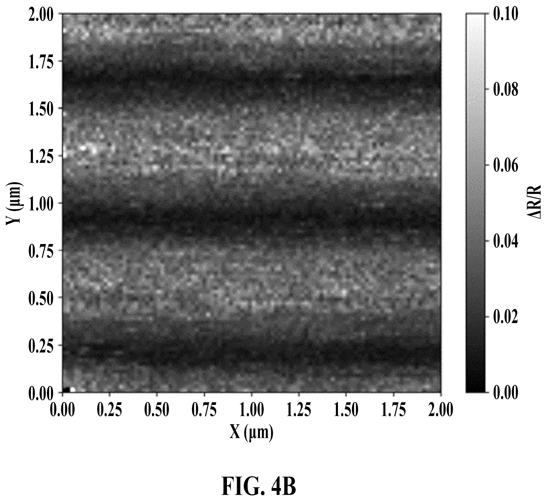

FIG. 1 is a diagram schematically illustrating a temperature distribution measurement device using an optical probe according to an embodiment, and FIG. 2 is a partial enlarged view of an end portion of an optical probe according to an embodiment. FIG. 3 is a diagram schematically illustrating a fast Fourier transform (FFT) process of a processing unit according to an embodiment, and FIGS. 4A and 4B are diagrams illustrating a temperature change distribution image according to an embodiment.

Referring to FIGS. 1 to 4B, a temperature distribution measurement device 1 according to an embodiment may irradiate light to a sample 91 using an optical probe 13 and may detect light reflected from the sample 91. The temperature distribution measurement device 1 may measure a reflectance change ΔR of the sample 91 from the detected light according to temperature and may obtain a temperature change ΔT of the sample 91 using "Equation 1" below. The temperature distribution measurement device 1 may finally obtain a temperature change distribution image by scanning the sample 91 with the optical probe 13.$Δ R / R = κ Δ T$

The temperature distribution measurement device 1 may reduce the influence of light diffraction when measuring the temperature of the sample using a near-field measuring scheme and may reduce damage to the sample 91. In this case, the near-field may indicate that a distance h between the optical probe 13 and the sample 91 is less than a wavelength λ of the light irradiated to the sample 91. The temperature distribution measurement device 1 may include a sample holder 11, a light source unit 12, the optical probe 13, an observation unit 14, a probe holder 15, a detector 16, and a processing unit 17.

The sample 91 may be placed on the sample holder 11. The sample holder 11 may be disposed in a flat space, for example, the ground. The sample holder 11 may include a base 111 supported in the flat space and a sample stage 112, which is connected to the base 111 and on which the sample 91 is disposed. The sample stage 112 may be driven to move relative to the base 111. Driving the sample stage 112 may be controlled by a stage controller. When the sample stage 112 is driven, the sample stage 112 may move in a direction parallel to the x-axis and a direction parallel to the y-axis relative to the base 111. As the sample stage 112 moves, a position of the sample 91 relative to the base 111 may vary.

The light source unit 12 may output an optical signal. For example, the light source unit 12 may include a laser diode (LD) or a light-emitting diode (LED). The optical signal output from the light source unit 12 may be transmitted to the optical probe 13. The light source unit 12 and the optical probe 13 may be connected by a coupler. The coupler may distribute and combine optical signals. The coupler may be, for example, a 3 dB coupler. In addition, a power meter may be connected to the coupler, and the intensity of the optical signal may be measured.

An optical isolator and a variable optical attenuator (VOA) may be disposed between the light source unit 12 and the coupler. The optical isolator connected to the light source unit 12 may ensure unidirectional propagation of the optical signal. The optical isolator may prevent reverse flow of light by blocking reflected light returning to the light source unit 12. The VOA may control the intensity of the optical signal.

While the optical probe 13 is spaced apart from the sample 91, the optical probe 13 may irradiate the optical signal output from the light source unit 12 to the sample 91 and may collect an optical signal reflected from the sample 91. As the optical probe 13 is positioned in the near-field based on the sample 91, spatial resolution of the temperature distribution measurement device 1 may be determined only by a diameter of a hole d of an end portion of the optical probe 13. Within a range in which the optical probe 13 is driven, various wavelengths may be measured without changing spatial resolution. In this case, the range in which the optical probe 13 is driven may be determined by a material and configuration of the optical probe 13.

An approximate position of the optical probe 13 with respect to the sample 91 may be observed by the observation unit 14. The observation unit 14 may include a microscope, a camera, and an LED. An image observed by the observation unit 14 may be transmitted to a computer. After a user identifies the approximate position of the optical probe 13 with respect to the sample 91 via the observation unit 14, the user may set an accurate position of the optical probe 13 with respect to the sample 91 by driving the probe holder 15 or the sample stage 112.

In an embodiment, the observation unit 14 may move in a first direction that is a vertical direction. In this case, the first direction may be a height direction of the sample holder 11 and a direction parallel to the z-axis. As the observation unit 14 moves in the first direction, the observation unit 14 may distance from or approach the sample 91. When the observation unit 14 approaches the sample 91, the probe holder 15 may be driven to move in a second direction intersecting with the first direction and may distance from the sample 91. For example, a support portion 151 may be driven to move in the +y direction. The observation unit 14 may approach the sample 91 without colliding with the optical probe 13. In this process, via the observation unit 14, a low-resolution temperature distribution image with respect to a relatively wide area of the sample 91 may be obtained first, and a targeted high-resolution temperature distribution image of a narrow area of the sample 91 may be obtained via the optical probe 13.

The optical probe 13 may be connected to the probe holder 15. The probe holder 15 may be driven to move the optical probe 13 in the vertical direction. The probe holder 15 may include the support portion 151, a first connecting portion 152, a second connecting portion 153, and a fixed portion 154.

The support portion 151 may be disposed on a flat portion, such as the ground. The first connecting portion 152 may be connected to the support portion 151 and may be driven to move in the vertical direction relative to the support portion 151. The first connecting portion 152 may be driven by being controlled by a probe holder controller.

The second connecting portion 153 may be connected to the first connecting portion 152 and may be driven to move in the vertical direction relative to the first connecting portion 152. The second connecting portion 153 may be driven by being controlled by a stage controller. The probe holder controller, the stage controller, and a distance controller 19 may communicate with the computer, and a control command may be input via the computer.

The fixed portion 154 may be connected to the second connecting portion 153 and may fix the optical probe 13. A range in which the second connecting portion 153 moves relative to the first connecting portion 152 may be less than a range in which the first connecting portion 152 moves relative to the support portion 151. From this structure, an approximate position of the optical probe 13 with respect to the sample 91 may be determined by driving the first connecting portion 152, and then an accurate position of the optical probe 13 with respect to the sample 91 may be adjusted by driving the second connecting portion 153.

In an embodiment, the optical probe 13 may be fixed to an oscillator 18 connected to the fixed portion 154. The oscillator 18 is described below. Although it is described that the number of drivable connecting portions of the probe holder 15 is two, the number of connecting portions is not limited thereto.

The detector 16 may be connected to the coupler and may detect an optical signal collected by the optical probe 13. The intensity of the optical signal may be determined by the intensity of light. The intensity of light collected by the optical probe 13 may have a value less than or equal to a few nanowatts. The detector 16 may include an avalanche photodiode (APD) or a photomultiplier tube (PMT) to detect a significantly small intensity of light. The optical signal detected by the detector 16 may be transmitted to the processing unit 17.

The processing unit 17 may receive the optical signal detected by the detector 16 in the form of a current signal and may calculate the amount of reflectance change of the sample 91 based on the received current signal. The processing unit 17 may calculate a temperature change value at a first point of the sample 91 using the computed amount of reflectance change. As the sample stage 112 moves relative to the base 111 and the optical probe 13 scans the sample 91, temperature change values at multiple points of the sample 91 to be measured may be calculated, and a temperature change distribution image may be obtained. The temperature change distribution image may be transmitted to a computer connected to the processing unit 17. In an embodiment, the processing unit 17 may include a signal amplifier 171, an oscilloscope 172, and a data acquisition board (DAQ)173.

The signal amplifier 171 may amplify a weak light signal received from the detector 16. The signal amplifier 171 may improve a signal-to-noise ratio (SNR) and data accuracy by strengthening the optical signal. The oscilloscope 172 may be connected to the signal amplifier 171 and may display a temporal change in voltage or signal. For example, the oscilloscope 172 may display phase amplitude and frequency of the optical signal. The DAQ 173 may be connected to the signal amplifier 171, may collect, convert, and process an optical signal, and may sample the optical signal into digital data. The data may be collected and recorded via the DAQ 173.

In an embodiment, the processing unit 17 may reduce noise of the optical signal using FFT. When a sine wave current is applied to the sample 91 via a function generator and a high-voltage amplifier, heat may be generated in the sample 91 due to the Joule effect. A temperature change in the sample 91 may be induced at the same frequency as the current applied to the sample 91. In this state, after light is irradiated to the sample 91 via the optical probe 13, the reflected optical signal may be collected, and the optical signal having the same frequency as the current applied to the sample 91 may be detected by the detector 16. Thereafter, when the processing unit 17 converts the optical signal into a frequency domain through FFT, a basis component R of the optical signal may be separated from a frequency component ΔR/2 applied to the current, and the amount of temperature change ΔT and the temperature change distribution image may be obtained using "Equation 1" based thereon.

The temperature change distribution image obtained through the process described above may be clearer than a temperature change distribution image obtained using a thermoreflectance microscope. As shown in FIG. 4A, compared to the temperature change distribution image of the sample 91 obtained using the thermoreflectance microscope, the temperature change distribution image of the sample 91 obtained using the optical probe 13 as shown in FIG. 4B may be clearer.

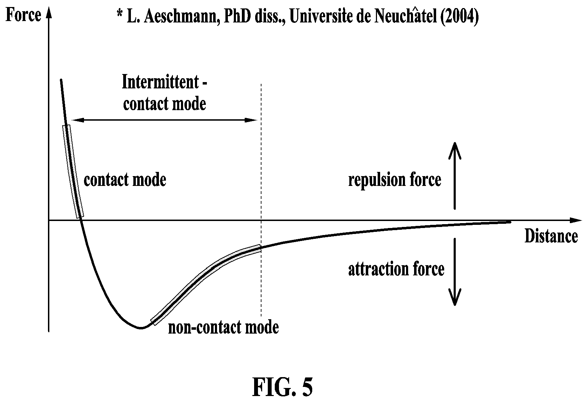

FIG. 5 is a graph showing a force with respect to a distance between a surface of a sample and an optical probe according to an embodiment.

Referring to FIG. 5, an oscillator (e.g., the oscillator 18 of FIG. 1) according to an embodiment may be, for example, a crystal oscillator. The oscillator may be connected to a fixed portion (e.g., the fixed portion 154 of FIG. 1) of a probe holder. An optical probe (e.g., the optical probe 13 of FIG. 1) may be fixed to the oscillator and may move together with the oscillator. The oscillator may reduce a degree of diffraction of an optical signal by maintaining a gap between the optical probe and a sample (e.g., the sample 91 of FIG. 1) close and constant.

In an embodiment, the oscillator may control a position of the optical probe with respect to the surface of the sample to be constant through shear force feedback. An attraction force or repulsion force may be generated between the sample and the optical probe due to interaction, and a shear force may be generated in the oscillator connected to the optical probe. As the optical probe moves away or approaches the surface of the sample, the attraction force or repulsion force between the sample and the optical probe may vary, and the shear force applied to the oscillator may vary.

A distance controller (e.g., the distance controller 19 of FIG. 1) may detect a change in shear force of the oscillator amplified by a sensor amplifier and may communicate with a stage controller. The stage controller may drive a sample stage or a second connecting portion. From this process, the shear force of the oscillator may be restored to a user-defined shear force preset in a non-contact mode, and the optical probe may be placed in its initial position. In addition, the distance controller may communicate with a probe holder controller, and the probe holder controller may drive the second connecting portion.

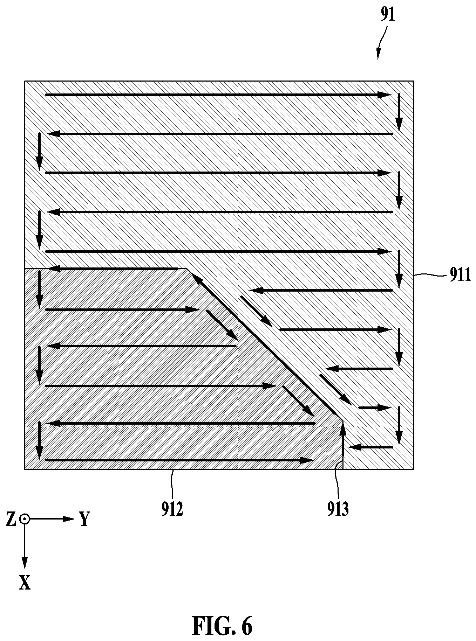

FIG. 6 is a plan view of a sample according to an embodiment.

Referring to FIG. 6, in an embodiment, in the case of the sample 91, such as a semiconductor, the height of the surface of the sample 91 may not be constant, and a change in reflectance according to a point on the surface may be significant. The sample 91 may include a first area 911 and a second area 912 having a height that is different from a height of the first area 911. In this case, the height may be the length of the sample 91 measured in a direction parallel to the z-axis. A temperature distribution measurement device (e.g., the temperature distribution measurement device 1 of FIG. 1) may sequentially scan the surface of the sample 91 having different surface heights for each area and may obtain a temperature change distribution image. Hereinafter, a process of obtaining the temperature change distribution image from the sample 91 including areas having different heights is further described.

Firstly, a low-resolution image of the sample 91 may be obtained by an observation unit (e.g., the observation unit 14 of FIG. 1). An image in which a boundary area 913 with a significant brightness change is extracted from the low-resolution image of the sample 91 may be obtained using a detection algorithm, such as sobel edge detection. In this case, the boundary area 913 may be a boundary between the first area 911 and the second area 912. Next, a low-resolution scanning map may be generated by scanning the boundary area 913 of the sample 91 by the observation unit and scanning a portion of the sample 91 without a brightness change using a raster scan or snake scan scheme. In this case, the portion without the brightness change may be the first area 911 and the second area 912. For example, after scanning the first area 911 first using a snake scan scheme, the boundary area 913 may be scanned, and the second area 912 may be scanned using the snake scan scheme. Through this process, the low-resolution scanning map may be generated.

A temporary high-resolution image and an topography image of the sample 91 may be obtained by scanning the sample 91 with an optical probe (e.g., the optical probe 13 of FIG. 1) along the low-resolution scanning map. By using the detection algorithm, a boundary area image of the sample 91 may be obtained from the temporary high-resolution image and the topography image, and an image value may be normalized.

A final boundary image of the sample 91 may be obtained by aggregating the temporary high-resolution image and the topography image. Based on the final boundary image, a scanning map may be regenerated through scanning by the observation unit. In this case, similar to the process of generating the low-resolution scanning map, the observation unit may scan along the boundary area 913 of the sample 91 and may scan a portion of the sample 91 without a brightness change using raster scanning or snake scanning. A high-resolution temperature change distribution image of the sample may be finally obtained by scanning the sample 91 with the optical probe along the regenerated scanning map. From this process, distortion of an optical signal occurring in the boundary area 913 may be reduced, and the quality of the temperature change distribution image may be enhanced.

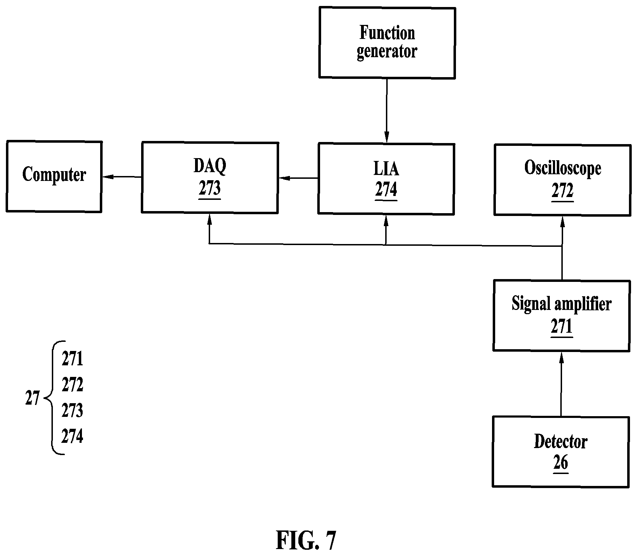

FIG. 7 is a diagram illustrating a processing unit of a temperature distribution measurement device according to an embodiment.

Referring to FIG. 7, a processing unit 27 according to an embodiment may further include a lock-in amplifier (LIA) 274. The processing unit 27 may calculate the amount of reflectance change of the sample via the LIA 274 instead of using FFT.

A signal amplifier 271 may transmit an optical signal received from a detector 26 (e.g., the detector 16 of FIG. 1) to an oscilloscope 272, a DAQ 273, and the LIA 274. A function generator (e.g., the function generator of FIG. 1) may transmit the form of change in a current applied to a sample (e.g., the sample 91 of FIG. 1) to the LIA 274. The LIA 274 may receive data from the signal amplifier 271 and may extract a component corresponding to a signal, for example, a frequency component ΔR/2 of the current applied to the sample, from the data. A value extracted by the LIA 274 may be transmitted to the DAQ 273. Compared to FFT, by using the LIA 274, speed limitations due to computer performance may be reduced, and the SNR may be improved at high operating speed.

Although the embodiments are described with reference to the limited drawings, one of ordinary skill in the art may apply various technical modifications and variations based thereon. For example, suitable results may be achieved if the described techniques are performed in a different order, and/or if components in a described system, structure, device, or circuit are combined in a different manner, and/or replaced or supplemented by other components or their equivalents.

Therefore, other implementations, other embodiments, and equivalents to the claims are also within the scope of the following claims.

## Claims

1. A temperature distribution measurement device comprising:
a sample holder on which a sample is placed;
a light source unit configured to output an optical signal;
an optical probe configured to irradiate the optical signal to the sample while being spaced apart from the sample and collect an optical signal reflected from the sample;
a detector configured to detect the collected optical signal;
a processing unit configured to receive the optical signal detected by the detector in a form of a current signal, calculate an amount of reflectance change of the sample based on the received current signal, and calculate a temperature change value at a first point of the sample using the calculated amount of reflectance change; and
an observation unit configured to observe a position of the sample and a position of the optical probe.

2. The temperature distribution measurement device of claim 1, further comprising:
an oscillator attached to the optical probe; and
a distance controller configured to measure an amplitude and a frequency of the oscillator and control the optical probe to maintain a distance between the optical probe and the sample to be constant based on the measured amplitude and the measured frequency of the oscillator.

3. The temperature distribution measurement device of claim 2,
wherein the amplitude and the frequency of the oscillator change as the distance between the optical probe and the sample changes.

4. The temperature distribution measurement device of claim 1,
wherein the processing unit is further configured to calculate temperature conversion values at other points of the sample and obtain a temperature change distribution image of the sample by matching each of the calculated temperature conversion values to each pixel.

5. The temperature distribution measurement device of claim 1,
wherein the sample comprises:
a first area; and
a second area having a height that is different from a height of the first area.

6. The temperature distribution measurement device of claim 5,
wherein the optical probe is further configured to irradiate an optical signal along a boundary between the first area and the second area.

7. The temperature distribution measurement device of claim 1,
wherein the observation unit is movable in a first direction that is a height direction of the sample holder.

8. The temperature distribution measurement device of claim 7, further comprising:
a probe holder configured to support the optical probe,
wherein the probe holder is movable in a second direction intersecting with the first direction.
